Europäisches Patentamt

European Patent Office

Office européen des brevets

(19)

(11) Veröffentlichungsnummer: **0 477 598 A2**

## (12) EUROPÄISCHE PATENTANMELDUNG

(21) Anmeldenummer: **91114774.2**

(22) Anmeldetag: **02.09.91**

(51) Int. Cl.5: **G06F 9/38**

(30) Priorität: **26.09.90 DE 4030438**

(43) Veröffentlichungstag der Anmeldung:
**01.04.92 Patentblatt 92/14**

(84) Benannte Vertragsstaaten:
**AT DE ES FR GB IT NL**

(71) Anmelder: **SIEMENS AKTIENGESELLSCHAFT**
**Wittelsbacherplatz 2**
**W-8000 München 2(DE)**

(72) Erfinder: **Wahr, Alfons-Josef, Dipl.-Ing.**
**Pucher Strasse 52**
**W-8080 Fürstenfeldbruck(DE)**

(54) **Befehlswerk für einen n Prozessorelemente aufweisenden Prozessor.**

(57) Das Befehlswerk zur parallelen Versorgung von n Prozessorelementen (PE) mit Befehlen weist einen Befehlspufferspeicher (BPU) auf, der mindestens n Befehle speichern kann. Neue Befehle werden z.B. aus einem Cachespeicher (CA) erst dann in den Befehlspufferspeicher geladen, wenn dieser weniger als n Befehle enthält oder wenn ein ganzes Befehlswort Platz hat. Die im Befehlspufferspeicher (BPU) enthaltenen Befehle werden mit Hilfe einer Befehlsübergabeeinheit (BUE) den einzelnen Prozessorelementen (PE) zugeordnet und die dem Prozessorelement zugeordneten Befehle mit Hilfe eines Auswahlsignales gekennzeichnet. Eine Vordecodierungsstufe (BDC) decodiert die Befehle, die den Prozessorelementen zugeführt werden, und ermöglicht es damit einer Konfliktprüfstufe (KFL) festzustellen, ob die parallel durch die Prozessorelemente zu bearbeitenden Befehle die vorherige Bearbeitung von anderen Befehlen erfordert. Ist dies der Fall, dann werden Konfliktsignale erzeugt, die einer Steuersignalstufe zugeleitet werden. Diese erzeugt aus den Auswahlsignalen und den Konfliktsignalen Steuersignale für die Prozessorelemente (PE), die diesen mitteilen, ob Befehle (BEF) an den Prozessorelementen zur Übernahme vorliegen bzw. ob ein anliegender Befehl wegen eines Konfliktsignales ausführbar ist oder noch nicht.

FIG 1

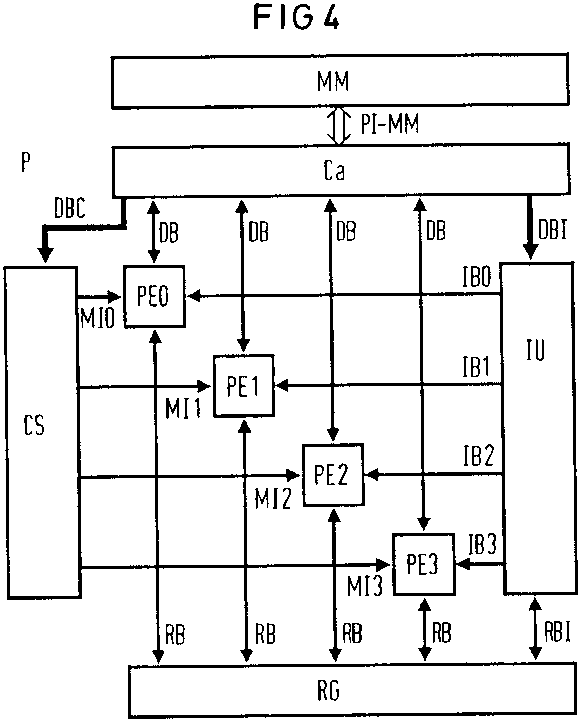

Die Hochintegration ermöglicht es, daß auf einem Chip große Cachespeicher realisiert werden können. Derartig große Cachespeicher sind nicht ausgelastet, wenn nur ein einziger Prozessor auf sie zugreifen kann. Aus diesem Grunde wäre es möglich, einen solchen Cachespeicher einem Parallelrechnersystem zuzuordnen. Die Folge wäre, daß zusätzliche Software geschafft werden müßte, um die Zugriffe der einzelnen Prozessoren zu dem Cachespeicher zu synchronisieren und um die Kommunikation zwischen Cachespeicher und Prozessoren einwandfrei zu gestalten. Eine andere Möglichkeit besteht darin, pro Prozessor mehrere parallele Prozessorelemente, die z.B. als CPU's realisiert sein können, vorzusehen. Bei einer derartigen Realisierung können bestehende Programme ohne weiteres verwendet werden, ohne daß neu übersetzt werden müßte, neu gebunden werden müßte oder eine sonstige Vorverarbeitung erforderlich wäre. Ein Beispiel eines derartigen Prozessors zeigt Figur 4.

Nach Figur 4 weist ein Prozessor P z.B. vier Prozessorelemente PE0 bis PE3 auf, die als Central Processing Unit realisiert sein können und dementsprechend Befehle bearbeiten können. Die Prozessorelemente PE sind über Datenbusse DB mit einer einen Cachespeicher enthaltenden Cacheeinrichtung CA verbunden und können parallel zur Cachespeichereinrichtung CA zugreifen. Die Cachespeichereinrichtung CA ist seinerseits mit einem Hauptspeicher MM auf übliche Weise verbunden. Weiterhin ist es vorteilhaft, wenn die Prozessorelemente PE über eigene Datenbusse RB mit einer Registerbank RG verbunden sind und eventuell über Mikrobefehlsbusse MI mit einem Steuerspeicher CS. Dies ist dann sinnvoll, wenn die Befehlsbearbeitung durch die Prozessorelemente PE die Benutzung von Mikroprogrammen erfordert, die im Steuerspeicher CS stehen. Die von den Prozessorelementen PE zu bearbeitenden Befehle werden diesen über Befehlsbusse IB von einem Befehlswerk IU zugeleitet. Das Befehlswerk IU ist seinerseits über einen Befehlsdatenbus DBI mit der Cachespeichereinrichtung und über einen Registerbus RBI mit der Registerbank RG verbunden.

Ein Prozessor mit mehreren Prozessorelementen PE arbeitet nur dann optimal, wenn die einzelnen Prozessorelemente PE parallel Befehle bearbeiten können. Die der Erfindung zugrundeliegende Aufgabe besteht darin, ein Befehlswerk anzugeben, das diese Aufgabe erfüllen kann. Die Aufgabe wird für ein Befehlswerk für ein n Prozessorelemente aufweisenden Prozessor gemäß den Merkmalen des Patentanspruches 1 gelöst.

Das Befehlswerk muß n parallele Prozessorelemente parallel mit Maschinenbefehlen versorgen. Hierzu lädt das Befehlswerk mit Hilfe des Befehlsdatenbusses aus dem Cachespeicher des Systems aus dem Befehlsstrom soviele Worte gleichzeitig, also parallel, daß es möglichst n Befehle zugleich bekommt. Bei Befehlscodes mit variabler Befehlslänge ist die Lösung dieses Problemes wesentlich schwieriger als bei solchen mit fester Codelänge. Zum Beispiel ist es bei variabler Befehlslänge möglich, daß Befehle 2, 4 oder 6 Byte umfassen. Dann kann aus dem Cachespeicher jeweils ein Block von Befehlen geladen werden, der bei n parallelen Prozessorelementen n mal maximale Befehlscodelänge breit ist. Es ist aber auch möglich, einen Befehlsblock jeweils zu laden, der n mal mittlere Befehlscodelänge breit ist. Der letztere Fall würde dann bedeuten, daß im Befehlspufferspeicher des Befehlswerkes eventuell n Befehle der maximalen Befehlscodelänge nicht bearbeitet werden können, ohne daß aus dem Cachespeicher nachgeladen werden muß. Eine solche Lösung wäre dann vertretbar, wenn Befehle mit maximaler Befehlscodelänge verhältnismäßig selten auftreten.

Bei Befehlen unterschiedlicher Befehlscodelänge ist es vorteilhaft, wenn zwischen Befehlspufferspeicher und Übergabeeinheit eine Selektionseinheit angeordnet ist, die aus dem Befehlspufferspeicher die anstehenden n Befehle selektiert und den Prozessorelementen zuordnet. Dies kann dann problematisch sein, wenn die vom Cachespeicher in das Befehlswerk übertragenen Worte weniger als n Befehle enthalten, weil z.B. die Breite des Befehlsdatenbusses kleiner ist als n mal Befehlsbreite. In diesem Fall müssen für die Prozessorelemente Enable-Steuersignale erzeugt werden, dies geschieht mit Hilfe der Steuersignalstufe. Aus den Steuersignalen können die Prozessorelemente dann entnehmen, ob sie mit einem neuen Befehl versorgt worden sind. Dabei kann die Versorgung mit Befehlen gleichzeitig geschehen, und zwar in der Sequenz z.B. von links nach rechts in Abhängigkeit der Lage der Prozessorelemente oder aber auch dynamisch zirkulierend rundum, wobei in diesem Fall ein Zeiger oder Index mitzuführen ist, der angibt, welches Prozessorelement den ersten unbearbeiteten Befehl enthält. Die Befehle werden somit den Prozessorelementen entweder en Block bzw. dynamisch zirkulierend paarweise bzw. einzeln übergeben.

Sollen mehrere Befehle parallel bearbeitet werden, dann können möglicherweise Konfliktsituationen entstehen. Zum Beispiel benutzen sequentiell später durchzuführende Befehle Resourcen, wie Quellregister, die durch vorhergehende Operationen erst berechnet werden müssen; oder nachfolgende Befehle wollen Register beschreiben, die weiter vorne noch als Quelle benötigt werden; oder vorausgehende Befehle können nachfolgende Befehle modifizieren. Diese Konfliktsituationen müssen erkannt werden und entsprechend behandelt werden. Dies erfolgt mit Hilfe der Konfliktprüfstufe, die vordekodierte Befehle untersucht und bei Auftreten eines Konfliktes ein Konfliktsignal erzeugt, das der Steuersignalstufe zugeführt wird und diese veranlaßt, das die Übernahme eines Befehlswortes auslösende Steuersignal zu unterdrükken.

Da in Programmen häufig Verzweigungsbefehle, Sprungbefehle oder bedingte Befehle vorkommen, ist es zweckmäßig, diese bedingten Befehle zu erkennen, um eventuell die Bearbeitung der durch den Befehl ausgelösten Alternativen vorzubereiten oder bereits teilweise durchzuführen. Dementsprechend ist es vorteilhaft eine Sprungbefehlseinheit vorzusehen, die aus den vordekodierten Befehlen solche bedingten Befehle erkennt und entsprechend die Prozessorelemente über die Steuersignalstufe beeinflußt.

Da häufig Operanden zur Adressenberechnung erforderlich sind, kann zusätzlich eine Operandenadressierungseinheit vorgesehen werden, die aus dem vordekodierten Befehlscode solche Befehle erkennt und das Laden der Operandenadresse z.B. mit Hilfe einer Operandenfetchstufe veranlaßt. Die Operandenadresse, bei Sprungbefehlen und Prozeduraufrufen, bzw. Rücksprüngen auch als Sprungzieladresse benannt, kann dann in einen Befehlszähler übertragen werden.

Andere Weiterbildungen ergeben sich aus den Unteransprüchen.

Anhand eines Ausführungsbeispieles, das in den Figuren dargestellt ist, wird die Erfindung weiter erläutert. Es zeigen

Figur 1 ein Blockschaltbild des Befehlswerkes,
Figur 2 eine erste Ausführung des Befehlspufferspeichers,
Figur 3 eine zweite Ausführung des Befehlspufferspeichers.

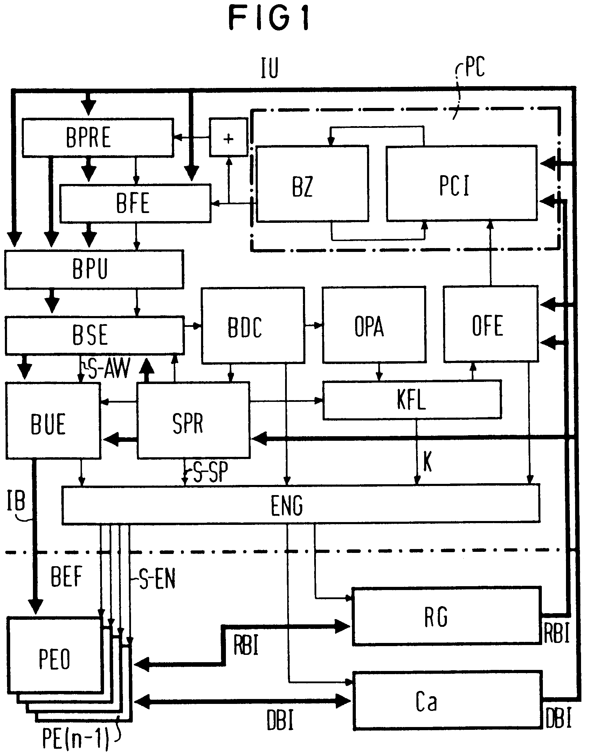

Aus Figur 1 kann ein Befehlswerk IU entnommen werden, daß die oben erläuterten Aufgaben erfüllt. Aus Figur 4 bekannte Einheiten sind die Prozessorelemente PE0 bis PEn-1, eine Registerbank RG und eine Cachespeichereinrichtung CA.

Die Cachespeichereinrichtung CA kann zunächst über den Befehlsdatenbus DBI mit einer Befehlsfetchstufe BFE und mit einem Befehlspufferspeicher BPU verbunden sein. Es ist zusätzlich möglich, daß der Befehlsdatenbus DBI mit einer Befehlsprefetchstufe BPRE verbunden ist, wie es in Figur 1 dargestellt ist.

Die Befehlsfetchstufe BFE holt die Befehle aus dem Cachespeicher, speichert sie zwischen und lädt sie dann in den Befehlspufferspeicher BPU. Selbstverständlich ist es auch möglich, Befehle direkt in den Pufferspeicher BPU zu laden. Ist also der Befehlspufferspeicher BPU leer oder enthält er nicht genügend Befehle, z.B. weniger als n Befehle, so fordert die Befehlsfetchstufe BFE die in der Befehlssequenz folgenden Befehle aus dem Cachespeicher oder einem anderen Speicher, z.B. dem Hauptspeicher MM, an und lädt sie in den Befehlspufferspeicher. Zur Adressierung der Befehle ist ein Befehlszähler BZ vorgesehen, der mit der Befehlsfetchstufe PFE verbunden ist.

Wenn zusätzlich eine Befehlsprefetchstufe vorhanden ist, dann können z.B. in der Zeit, in der kein Zugriff zum Cachespeicher erfolgt, die wahrscheinlich nächsten n Befehle von der Befehlsprefetchstufe BPRE geladen werden und auf Vorrat dort gehalten werden. Wenn neue Befehle in den Befehlspufferspeicher BPU zu laden sind, dann kann dies entweder über die Befehlsfetchstufe BFE oder über Befehlsprefetchstufe BPRE erfolgen. Die Befehlsprefetchstufe ist ebenfalls mit dem Befehlszähler BZ verbunden und kann aus diesen die Adresse der zu ladenden Befehle entnehmen. Wenn z.B. die Befehlsfetchstufe BFE n Befehle lädt, so kann die Befehlsprefetchstufe BPRE die nächsten n Befehle vorsorglich laden.

Der Befehlspufferspeicher BPU kann eine solche Größe haben, daß mindestens n Befehle den Prozessorelementen PE zur Verfügung gestellt werden können. Sollten jedoch die Befehle unterschiedliche Befehlscodelänge haben, dann kann das Nachladen des Befehlspufferspeichers BFE nach unterschiedlichen Verfahren erfolgen:

- Z.B. kann dafür gesorgt werden, daß immer ein Befehlsstring, der jeweils aus n Befehlen besteht, geladen ist. Dazu muß der geladene Befehlsstring die maximal notwendige Länge haben, die gleich ist n mal maximale Befehlslänge; wenn vier Prozessorelemente vorgesehen sind und die maximale Befehlslänge z.B. 6 Byte wäre, dann müßte der Befehlsstring 24 Byte haben, so daß garantiert vier Befehle aus dem Befehlspufferspeicher entnommen werden können.

- Eine andere Möglichkeit besteht darin, daß sehr oft n Befehle entnommen werden können, aber nicht immer. Wenn z.B. ein Befehlsblock geladen wird mit einer Länge von wenigstens n mal mittlere Befehlslänge, so können im Mittel z.B. 50% der Fälle n Befehle entnommen werden.

- Weiterhin wäre es möglich, jeweils einen Befehlsblock von der Breite des Befehlsdatenbusses DBI in den Befehlspufferspeicher BPU zu laden und aus dem Befehlspufferspeicher BPU jeweils die ganz darin enthaltenen Befehle den Prozessorelementen PE zuordnen. Auch in diesem Falle ist es möglich, daß bei großer Befehlslänge aus dem Befehlspufferspeicher BPU nicht auf einmal parallel alle n Prozessorelemente bedient werden können, vielmehr ein zusätzliches Nachladen notwendig ist.

Am Ausgang des Befehlspufferspeichers BPU kann eine Selektionseinheit BSE angeordnet werden, die allerdings bei fester Befehlslänge entbehrbar ist. Bei variabler Befehlslänge und bei variabler Zuordnung der Befehle BEF zu Prozessorelementen PE ist diese Einheit aber sinnvoll. Im Befehlspufferspeicher BPU zeigt ein Index auf den Anfang, also den ersten unbearbeiteten Befehl BEF der Befehlssequenz. Dieser erste Befehl BEF wird mit Hilfe der Selektionseinheit BSE selektiert und daran anschließend die folgenden Befehle BEF in Abhängigkeit der jeweiligen Befehlslänge der vorausgehenden Befehle. Dementsprechend ordnet die Selektionseinheit BSE den einzelnen Prozessorelementen PE die Befehle zu und erzeugt entsprechende Auswahlsignale S-AW, die sie einer Befehlsübergabeeinheit BUE zusammen mit den selektierten Befehlen überträgt.

Die von der Selektionseinheit BSE selektierten Befehle können z.B. über Multiplexer aus dem Befehlspufferspeicher herausgeholt und den Befehlsbussen IB zugeleitet werden und damit den entsprechenden Prozessorelementen. Diese Aufgabe wird von der Befehlsübergabeeinheit BUE ausgeführt. Es gibt auch das entsprechende Auswahlsignal an eine Steuersignalstufe ENG weiter, die dann die entsprechenden Steuersignale S-EN oder enable Signale den Prozessorelemente PE zuleitet.

Um Konfliktsituationen erkennen zu können, ist es zweckmäßig, die Befehle, die selektiert worden sind, darauf zu untersuchen, ob Konfliktsituationen möglich sind. Dazu ist es sinnvoll, die Befehle vor zu dekodieren, und zwar mit Hilfe der Befehlsvordekodierungsstufe BDC. Oft sind auch Operandenadreßberechnungen nötig, auch die können rechtzeitig erkannt werden und vorausberechnet werden und dazu die Vordekodierung herangezogen werden. Entsprechendes gilt für die Erkennung von Sprungbefehlen, deren rechtzeitige Erkennung die parallele Vorbereitung der möglichen Alternativen zuläßt. Auch hier kann die Vordekodierung der Befehle verwendet werden.

Wie bereits erläutert kann anhand der vordekodierten Befehle erkannt werden, ob ein den Prozessorelementen zuzuführender Befehl ein bedingter Befehl ist, wie z.B. ein Sprung-, Schleifen-, Call-, Return-, Systemcallbefehl. Eventuell nicht beschäftigte Prozessorelemente oder speziell hierfür vorgesehene Prozessorelemente können Verzweigungsalternativen mit hoher Verzweigungswahrscheinlichkeit parallel zum linearen Befehlsfluß voraus berechnen, soweit dies möglich ist und auch bereits Schleifenbefehle ausführen. Mit Hilfe einer Sprungbefehlseinheit SPR werden diese Fälle erkannt, eine Sprungsignal S-SP erzeugt, das der Übergabeeinheit BUE zugeführt wird und diese veranlaßt, mit Hilfe der Selektionseinheit BSE dem entsprechenden Prozessorelement die Alternativbefehle zuzuführen.

Operandenadressenberechnungen können in Abhängigkeit der Vordekodierung mit einer Operandenadressierungseinheit OPA erkannt werden, z.B. wenn die im Pufferspeicher selektierten Befehle Operandenzielberechnungen erforderlich machen, wie Operandenbezüge, zu deren Adressenberechnung ein oder mehrere Registerinhalte notwendig sind, Operandenbezüge, zu deren Adressenberechnung Speicherdaten notwendig sind, Operandenbezüge, zu deren Adressenberechnung Registerinhalte und Speicherdaten notwendig sind.

Wie bereits oben erläutert, können bei der parallelen Bearbeitung der Befehle durch die Prozessorelemente PE Konfliktsituationen auftreten, die erkannt werden müssen. Dazu ist eine Konfliktprüfstufe KFL vorgesehen, die aus den vordekodierten Befehlen derartige Konflikte erkennen kann und ein entsprechendes Konfliktsignal K erzeugt. Dieses wird der Steuersignalstufe ENG zugeleitet, die mit Hilfe des Konfliktsignales K das zugeordnete Prozessorelement PE solange sperrt, bis der Konflikt behoben ist. Es ist zweckmäßig, die Konfliktprüfstufe KFL nicht direkt mit der Befehlsvordekodierstufe BDC zu verbinden, sondern über die Operandenadressierungseinheit OPA oder über die Sprungbefehlseinheit SPR, da in diesen Einheiten noch notwendige Operandenadressen bzw. Adressen von Befehlsalternativen berechnet werden können.

Mit Hilfe einer Operandenfetchstufe OFE können die Operanden entweder aus dem Cachespeicher oder aus der Registerbank RG geholt werden und auch berechnet werden. Die Operanden, die Sprungzieladressen sind, können dem Befehlszähler PC zugeführt werden.

Die Steuersignalstufe ENG erzeugt aus den von der Übergabeeinheit, der Sprungbefehlseinheit SPR, der Konfliktprüfstufe KFL und eventuell der Operandenfetchstufe OFE abgegebenen Signalen Steuersignale oder Enable-Signale S-EN für die Prozessorelemente PE, aber auch für die Registerbank RG und die Cachespeichereinrichtung CA. Mit Hilfe dieser Steuersignale werden die Prozessorelemente PE davon informiert, daß z.B. ein Befehl BEF anliegt, der übernommen werden kann. Ebenso ist es möglich, daß die Steuersignalstufe ENG in Abhängigkeit der Konfliktsignale bestimmte Prozessorelemente, denen ein Befehl zugeordnet worden ist, solange sperrt, bis der Konfliktfall gelöst ist.

Der bereits erwähnte Befehlszähler BZ, der zusammen mit dem Inkrementer PC eine ZähleinheitPC bildet, gibt an, welcher Befehl gerade bzw. welcher Befehl als nächster durchzuführen ist. Wird ein Befehl durchgeführt, so wird der Befehlszähler im allgemeinen um den Wert 1 erhöht, außer bei Programmsprüngen. Werden hier allerdings k (O ≤ k ≤ n) Befehle parallel durchgeführt, so muß der Befehlszähler PZ um den Wert k inkrementiert werden. Dazu ist ein Inkrementer PCI vorgesehen. Diesem kann z.B. die Startadresse von einem Register der Registerbank über die Operandenfetchstufe OFE zugeleitet werden.

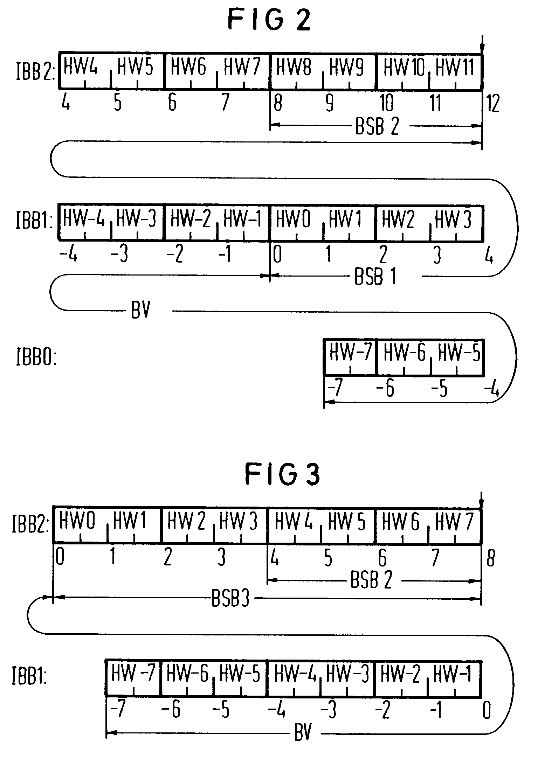

Der Aufbau des Befehlspufferspeichers BPU kann in der Abhängigkeit der Anzahl der zur Verfügung zu stellenden Befehle unterschiedlich sein. Ein Beispiel kann der Figur 2 entnommen werden. Bei der Besprechung des Befehlspufferspeichers nach Figur 2 wird davon ausgegangen, daß die Breite des Befehlsdatenbusses DBI kleiner ist als die maximale Breite des Befehlsstrings, der aus n Befehlen besteht. Als Beispiel sei angenommen, daß die Breite des Befehlsdatenbusses DBI 16 Byte ist, und die maximale Breite eines Befehlsstrings BSB (n mal maximale Befehlslänge) 24 Byte bei einer Befehlslänge von 6 Byte sein soll (BSB1). Andere mögliche Breiten eines Befehlsstrings, die sich aus der mittleren Befehlslänge ableiten, sind z.B. 16 Byte (BSB2) oder 14 Byte. Diese Fälle zeigen, wie Befehle variabler Breite verarbeitet werden sollen. Nach Figur 2 ist vorgesehen, daß der Pufferspeicher BPU in Speicherblöcke IBB eingeteilt ist, die jeweils die Breite des Befehlsdatenbusses DBI haben oder kleiner sind. In Figur 2 sind zwei Speicherblöcke IBB1 und IBB2 vorgesehen von der Breite des Befehlsdatenbusses und ein weiterer Speicherblock IBB0 von geringerer Breite. Die Speicherblöcke IBB1 und IBB2 bestehen aus 16 Byte, diese sind unterteilt in vier Worte oder acht Halbworte. Die Halbworte sind mit HW bezeichnet und bestehen jeweils aus zwei Byte. An den Halbwortgrenzen kann jeweils der Beginn eines Befehls stehen. Im ungünstigsten Falle führt dies zu einem Verschnitt BV von der Breite 14 Byte: BV = B(DBI) - 2 Byte = 14 Byte.

Sollen jeweils immer n = 4 Befehle ganz im Befehlspufferspeicher stehen und wird der mögliche Befehlsblockverschnitt berücksichtigt, so muß der Befehlspufferspeicher BPU eine Länge L haben, die folgendermaßen berechnet wird:

L = BSB + BV = n x (maximale Befehlslänge) + BV

Im Ausführungsbeispiel ist die maximale Befehlslänge 6 Byte, so daß bei 4 Prozessorelementen die Breite des maximalen Befehlsstringes BSB = 24 Byte ist, dazu 14 Byte addiert ergibt 38 Byte. Jeweils ein Speicherblock kann über den Befehlsdatenbus DBI auf einmal geladen werden, also entweder der Speicherblock IBB1 oder IBB2. Der Speicherblock IBB0, der nur drei Halbworte breit ist, dient zum Sichern von Worten aus den beiden anderen Speicherblöcken IBB1 und IBB2. Es ist davon auszugehen, daß der aktuelle Befehlsstring immer im Befehlsblockverschnitt, also im Bereich der Halbwörter -7 bis 0 beginnt. Der Beginn des Befehlsstrings kann mit Hilfe eines Zeigers angegeben werden. Für das Nachladen des Befehlspufferspeicher können dann drei Fälle unterschieden werden:

a) Nach Entnahme von n = 4 Befehlen beginnt der nachfolgende Befehlsstring im Bereich der Halbwörter -3 und 0 (inklusiv). In diesem Fall bleibt der Pufferspeicher unverändert, da noch n = 4 Befehle in ihm enthalten sind, nur der Index oder Zeiger wird neu berechnet.

b) Nach der Befehlsentnahme beginnt der nachfolgende Befehlsstring im Bereich der Halbwörter 1 bis 8 (inklusive). Der Befehlspufferspeicher muß nun um einen Befehlsblock versetzt werden:

IBB0      : = $IBB1_{1…3}$
IBB1      : = IBB2
IBB2      : = Inhalt der Befehlsfetchstufe BFE
Index      : = alter Befehlsstringanfang -8

c) Der Befehlsstring beginnt nach der Befehlsentnahme im Halbwortbereich 9 bis 12 (inklusive). Hier muß der Befehlspufferspeicher um zwei Befehlsblöcke versetzt werden:

IBB0      : = $IBB2_{9 - 11}$
IBB1      : = Inhalt der Befehlsfetchstufe BFE
IBB2      : = Inhalt der Befehlsprefetchstufe BPRE
Index      : = alter Befehlsstringanfang - 16.

Es ist auch möglich, daß der nur drei Halbworte lange Speicherblock IBB0 weggelassen wird. Der Befehlsblockverschnitt geht dann von -4 bis + 3, der Befehlsstring ist um drei Halbworte kürzer. Durch diese Maßnahme wird der Hardware-Realisierungsaufwand geringer, dafür können in einem Teil der Fälle nur drei Befehle übergeben werden.

Eine weitere mögliche Realisierung des Befehlspufferspeichers zeigt Figur 3. Während bei Figur 2 der Befehlspufferspeicher immer dann nachgeladen wird, wenn vorne ein oder zwei Befehlsblöcke von jeweils 4 Worten Platz haben, wird bei Figur 3 nur nachgegeladen, wenn am Befehlspufferende keine n Befehle mehr ganz enthalten sind und im Speicherblock IBB2 das erste Halbwort nicht geladen ist. Bei dieser Lösung können immer wenigstens 16 Bytes des Befehlsstrings (BSB 3) geladen werden. Deshalb sind in einem großen Teil der Fälle n = 4 Befehle geladen. Vorteil dieser Lösung ist, daß bei Sprungbefehlen weniger Befehlspufferinhalt verworfen werden muß.

Am Beispiel der Figur 2 wird angegeben, wie der Index, der den Beginn des Befehlsstrings angibt, berechnet werden kann.

```
if        Restindex ≥ 9 then    Index: = Restindex - 16
else if   Restindex ≥ 1 then    Index: = Restindex -  8
    else                        Index: = Restindex  ;
```

```
BEF 1        : = Befehlsstring (Index);
BL 1         : = Befehlslänge (BEF 1);
BEF 2        : = Befehlsstring (Index + BL1);
BL 2         : = Befehlslänge (BEF 2);
BEF 3        : = Befehlsstring (Index + BL 1 + BL 2);
BL 3         : = Befehlslänge (BEF 3);
BEF 4        : = Befehlsstring (Index + BL 1 + BL 2 + BL 3);
BL 4         : = Befehlslänge (BEF 4);
Restindex    : = Index + BL 1 + BL 2 + BL 3 + BL 4;
```

**Patentansprüche**

**1.** Befehlswerk für einen n Prozessorelemente (PE) aufweisenden Prozessor (P) mit

- einem Befehlspufferspeicher (BPU), in dem soviele Befehle gespeichert sind, daß eine parallele Bearbeitung der Befehle möglich ist,
- einer Befehlsfetchstufe (BFE), die die in der Befehlsfolge nächsten Befehle eines zu bearbeitenden Programmes aus einem Speicher (CA) in den Befehlspufferspeicher (BPU) lädt, wenn im Befehlspufferspeicher weniger als n Befehle stehen,
- einer Befehlsübergabeeinheit (BUE), die die Befehle (BEF) im Befehlspufferspeicher (BPU) den Prozessorelementen (PE) zuordnet und ein die Zuordnung zu den Prozessorelementen kennzeichnendes Auswahlsignal erzeugt,
- einer Vordecodierungsstufe (BDC), die die in der Befehlsübergabeeinheit (BUE) enthaltenen Befehle vordecodiert,
- einer Konfliktprüfstufe (KFL), die die vordecodierten Befehle von der Vordecodierungsstufe (BDC) erhält und aus dem Befehlscode Konflikte zwischen den von den Prozessorelementen (PE) parallel zu bearbeitenden Befehlen erkennt und in Abhängigkeit davon Konfliktsignale (KS) erzeugt,
- einer Steuersignalstufe (ENG), die aus den Auswahlsignalen und den Konfliktsignalen Steuersignale (S-EN) für die Prozessorelemente (PE) erzeugt, die diese zur Übernahme der bereitgestellten Befehle (BEF) veranlaßt bzw. im Konfliktfall Prozessorelemente für die Bearbeitung eines Befehls sperrt bis der Konfliktfall behoben ist.

**2.** Befehlswerk nach Anspruch 1,
dadurch **gekennzeichnet,**
daß zwischen Befehlspufferspeicher (BPU) und Befehlsübergabeeinheit (BUE) eine Selektionseinheit (BSE) angeordnet ist, die bei Befehlen variabler Länge die Befehle entsprechend ihrer Länge den Prozessorelementen (PE) zuordnet.

**3.** Befehlswerk nach Anspruch 2,
dadurch **gekennzeichnet,**
daß eine Sprungbefehlseinheit (SPR) vorgesehen ist, die mit der Vordecodierungsstufe (BDC) verbunden ist und die Sprungabefehle in der Befehlssequenz erkennt und für diesen Fall ein Sprungsignal erzeugt, daß der Selektioneinheit (BSE) zugeführt wird, wodurch veranlaßt wird, daß gleichzeitig Befehle der möglichen Alternativwege parallel ausgeführt werden.

**4.** Befehlswerk nach einem der vorhergehenden Ansprüche,
dadurch **gekennzeichnet,**
daß eine Operandenadressierungseinheit (OPA) vorgesehen ist, die mit der Vordecodierungsstufe (BDC) verbunden ist und die Operandenadressenberechnungen durchführt.

**5.** Befehlswerk nach Anspruch 4,
dadurch **gekennzeichnet,**

daß eine Operandenfetchstufe (OFE) vorgesehen ist, die die für die Adressenberechnung notwendigen Operanden aus einem Speicher (RG, CA) holt.

6. Befehlswerk nach einem der vorhergehenden Ansprüche,
dadurch **gekennzeichnet,**
daß eine Befehlsprefetchstufe (BPRE) vorgesehen ist, die mit dem Befehlspufferspeicher (BPU), der Befehlsfetchstufe (BFE) verbunden ist und die die auf die von der Befehlsfetchstufe (BFE) geladenen Befehle folgenden Befehle lädt.

7. Befehlswerk nach einem der vorhergehenden Ansprüche,
dadurch **gekennzeichnet,**
daß die Breite des Befehlspufferspeichers (BPU) gleich der Breite eines Befehlsstrings plus einem von der Breite des vom Speicher zum Befehlswerk führenden Befehlsdatenbusses abhängigen Verschnitts gewählt ist, wobei die Bereite des Befehlsstrings festgelegt ist durch die Anzahl der Prozessorelemente mal der maximalen Befehlslänge.

8. Befehlswerk nach Anspruch 7,
dadurch **gekennzeichnet,**
daß der Befehlspufferspeicher (BPU) in Speicherblöcke (IBB) höchstens von der Breite des Befehlsdatenbusses (DBI) eingeteilt ist und daß Befehle in den Pufferspeicher nachgeladen werden, wenn Platz für ein oder zwei neue Befehlsblöcke von der Breite des Befehlsdatenbusses gegeben ist.

9. Befehlswerk nach Anspruch 7,
dadurch **gekennzeichnet,**
daß der Befehlspufferspeicher (BPU) nachgeladen wird, wenn in ihm keine n Befehle mehr enthalten sind.

# FIG 1

EP 0 477 598 A2

# FIG 2

# FIG 3

9

# FIG 4